# DEMANDE DE BREVET EUROPEEN

(11) **EP 4 112 681 A1**
(43) Date de publication de la demande: **04.01.2023**
(21) Numéro de dépôt: 22182296.8
(22) Date de dépôt: 30.06.2022
(51) Int. Cl.: C08K 5/3465, C08K 5/3492, H01B 3/44, H01B 7/295, C08K 3/32, H01B 9/00

(54) **CÂBLE COMPRENANT UNE GAINE COMPACTE RETARDANTE AU FEU**

(30) Priorité: 02.07.2021 FR 2107181
(71) Demandeur: Nexans, 92400 Courbevoie (FR)
(72) Inventeur: LARCHE, Jean-François, 69250 Fleurieu-sur-Saône (FR); JABIOLE, Aurore, 69007 Lyon (FR); DESMARS, Loriane, 92400 Courbevoie (FR)
(74) Mandataire: Ipsilon

(57) **Abrégé**

La présente invention concerne un câble comprenant au moins un élément électriquement conducteur allongé, au moins une couche électriquement isolante entourant ledit élément électriquement conducteur allongé, et au moins une gaine polymère thermoplastique compacte comprenant au moins un système retardant au feu à base d'azote et de phosphore et au moins une polyoléfine, ladite gaine polymère thermoplastique compacte entourant ladite couche électriquement isolante, un mélange maître pour la fabrication dudit câble, et un procédé de préparation d'un tel câble mettant en œuvre un tel mélange maître.

## Description

La présente invention concerne un câble comprenant au moins un élément électriquement conducteur allongé, au moins une couche électriquement isolante entourant ledit élément électriquement conducteur allongé, et au moins une gaine polymère thermoplastique compacte entourant ladite couche électriquement isolante, ladite gaine polymère thermoplastique compacte comprenant au moins un système retardant au feu à base d'azote et de phosphore et au moins une polyoléfine, un mélange maître pour la fabrication dudit câble, et un procédé de préparation dudit câble mettant en œuvre ledit mélange maître.

L'invention s'applique en particulier aux câbles électriques destinés au transport d'énergie, notamment aux câbles d'énergie à basse tension (notamment une tension inférieure à 6 kV), à moyenne tension (notamment une tension allant de 6 à 45-60 kV) ou à haute tension (notamment une tension supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

De la demande de brevet EP 1 504 887 A1 est connu un câble électrique ignifugé comportant au moins un conducteur central entouré d'une couche isolante, elle-même étant entourée d'une gaine externe bicouche comportant une couche interne en matière synthétique ignifuge réticulée et une couche externe en matière synthétique ignifuge non réticulée. En particulier, la couche interne et la couche externe peuvent comprendre un copolymère d'oléfine avec des charges ignifuges telles que des composants hydratés à base d'hydroxyde d'aluminium ou de magnésie, ou de carbonate de magnésie. Toutefois, ces charges ignifuges sont généralement présentes en grande quantité dans la couche afin d'atteindre des performances de retard à la flamme appropriées. Par ailleurs, elles ont tendance à dégrader les propriétés mécaniques (allongement...) et rhéologique (viscosité...) de celle-ci.

D'autres agents ignifuges sont connus pour permettre l'obtention de bonnes propriétés de retard à la flamme tels que de l'oxyde d'antimoine en association avec des composés halogénés (notamment bromés ou chlorés). Toutefois, ces produits sont toxiques aussi bien pendant leur manipulation, que lorsque le câble est soumis à une source de chaleur tel qu'un incendie de par la libération de gaz toxiques.

Un but de la présente invention est de fournir un câble, notamment un câble d'énergie, présentant des propriétés de retard à la flamme améliorées, tout en garantissant une toxicité moindre et de bonnes propriétés mécaniques.

A cet effet, l'invention a pour premier objet un câble comprenant au moins un élément électriquement conducteur allongé, et au moins une couche électriquement isolante entourant ledit élément électriquement conducteur allongé, caractérisé en ce qu'il comprend en outre au moins une gaine polymère thermoplastique compacte entourant ladite couche électriquement isolante, ladite gaine polymère thermoplastique compacte comprenant au moins une polyoléfine et au moins un système retardant au feu à base d'azote et de phosphore.

Grâce à la gaine polymère thermoplastique compacte entourant ladite couche électriquement isolante, ladite gaine polymère thermoplastique compacte comprenant au moins une polyoléfine et au moins un système retardant au feu à base d'azote et de phosphore, le câble présente une résistance au feu améliorée, tout en garantissant une toxicité moindre et de bonnes propriétés mécaniques. Par ailleurs, ledit câble peut être utilisé aussi bien en tant que câble basse tension qu'en tant que câble moyenne tension. Enfin, le câble de l'invention présente, à l'issue de sa fabrication, toutes les propriétés pour résister à un incendie ou à des températures plus faibles que celles atteintes en cas d'incendie.

### La gaine polymère thermoplastique compacte

Dans la présente invention, l'expression « compacte » signifie que la gaine polymère thermoplastique de l'invention est une gaine non expansée (terme également bien connu selon l'anglicisme « *non foamed jacket* »). En d'autres termes, la gaine polymère thermoplastique de l'invention n'est pas obtenue à partir d'une composition (ou d'un mélange maître) comprenant au moins un agent moussant (terme également bien connu selon l'anglicisme « *foaming agent* »), qui va notamment permettre de créer de la porosité dans la gaine finale par exemple par dégagement d'un gaz.

Par rapport à une gaine expansée, on obtient grâce à cette gaine compacte des propriétés mécaniques améliorées, notamment en termes d'allongement, force à rupture, dureté, résistance aux fluides...

Au sens de la présente description, l'expression « thermoplastique » implique que la gaine polymère compacte de l'invention est une gaine non réticulée. En d'autres termes, la gaine polymère compacte de l'invention n'est pas obtenue à partir d'une composition réticulable ou d'une composition comprenant un ou plusieurs agents de réticulation, agents de couplage de type silane, peroxydes et/ou additifs qui permettent une réticulation ou soumise à un quelconque stimulus externe responsable d'une réticulation (UV, IR, etc...). Grâce à cette gaine thermoplastique, on obtient notamment les avantages suivants par rapport à une gaine réticulée : processabilité simplifiée (pas de température, vitesse...), recyclabilité et reprocessabilité

La gaine polymère thermoplastique compacte a de préférence une épaisseur allant de 0,1 à 5 mm environ, et de façon particulièrement préférée allant de 0,7 à 2,5 mm environ.

La gaine polymère thermoplastique compacte est de préférence une gaine externe. En d'autres termes, elle représente de préférence la couche la plus externe dudit câble. Le câble ne comprend pas alors d'autre(s) couche(s) entourant ladite gaine polymère thermoplastique compacte.

La gaine polymère thermoplastique compacte est de préférence une gaine extrudée.

### La polyoléfine

La gaine comprend au moins une polyoléfine. Une polyoléfine est un copolymère ou homopolymère d'oléfine.

La polyoléfine peut être choisie parmi les polymères et copolymères d'éthylène et de propylène.

La polyoléfine a de préférence une densité allant de 0,90 à 1,00 g/cm³ environ, ladite densité étant mesurée selon la norme ISO 1183A (à une température de 23°C).

De préférence, la polyoléfine est un polymère d'éthylène, de façon particulièrement préférée choisie parmi les polyéthylènes linéaires basse densité (LLDPE), les polyéthylènes basse densité (LDPE), les polyéthylènes moyenne densité (MDPE), les polyéthylènes haute densité (HDPE), les copolymères d'éthylène et d'acétate de vinyle (EVA), les copolymères d'éthylène et d'acrylate de butyle (EBA), les copolymères d'éthylène et d'acrylate d'éthyle acrylate (EEA), les copolymères d'éthylène et d'acrylate de méthyle (EMA), les copolymères d'éthylène et de 2-hexyléthyl acrylate (2HEA), et les copolymères d'éthylène et d'alpha-oléfines, tels que par exemple les polyéthylène-octène (PEO), les copolymères d'éthylène et de propylène (EPR), ou les terpolymères d'éthylène et de propylène (e.g. terpolymères d'éthylène propylène diène monomère ou EPDM).

La polyoléfine est de préférence une polyoléfine non polaire.

Dans la présente invention, l'expression « non polaire » signifie que le polymère de ce type ne comporte pas de fonctions polaires, telles que par exemple des groupements acétate, acrylate, hydroxyle, nitrile, carboxyle, carbonyle, éther, ester, ou tous autres groupements à caractère polaire bien connus dans l'art antérieur. Par exemple, un polymère non polaire est différent d'un polymère choisi parmi les copolymères d'éthylène du type copolymère d'éthylène et d'acétate de vinyle (EVA), copolymère d'éthylène et de butyle acrylate (EBA), copolymère d'éthylène et d'éthyle acrylate (EEA), copolymère d'éthylène et d'acrylate de méthyle (EMA), ou copolymère d'éthylène et d'acide acrylique (EAA).

La gaine polymère thermoplastique compacte du câble de l'invention peut comprendre au moins 50% en poids environ, de préférence au moins 60% en poids environ, et de façon particulièrement préférée au moins 70% en poids environ, de polyoléfine(s) non polaire(s) par rapport au poids total de polymère(s) dans la gaine polymère thermoplastique compacte.

De préférence, la gaine polymère thermoplastique compacte ne comprend pas de polymère(s) polaire(s), notamment du fait que de tels polymères polaires peuvent présenter des duretés inférieures ou des souplesses supérieures à des polyoléfines non polaires, plus cristallins.

De façon particulièrement préférée, la polyoléfine est un HDPE. En effet, ce polymère se révèle particulièrement adapté pour obtenir des cristallinités élevées et donc dureté accrue.

Dans la présente invention, l'expression « basse densité » signifie ayant une densité allant de 0,91 à 0,925 g/cm³ environ, ladite densité étant mesurée selon la norme ISO 1183A (à une température de 23°C).

Dans la présente invention, l'expression « moyenne densité » signifie ayant une densité allant de 0,926 à 0,940 g/cm³ environ, ladite densité étant mesurée selon la norme ISO 1183A (à une température de 23°C).

Dans la présente invention, l'expression « haute densité » signifie ayant une densité allant de 0,941 à 0,965 g/cm³, ladite densité étant mesurée selon la norme ISO 1183A (à une température de 23°C).

La polyoléfine représente de préférence au moins 50% en poids environ, de façon particulièrement préférée au moins 60% en poids environ, et de façon plus particulièrement préférée au moins 70% en poids environ, par rapport au poids total de la gaine polymère thermoplastique compacte.

La polyoléfine représente de préférence au plus 98 % en poids environ, et de façon particulièrement préférée au plus 95% en poids environ, par rapport au poids total de la gaine polymère thermoplastique compacte.

### Le système retardant au feu à base d'azote et de phosphore

La gaine polymère thermoplastique compacte comprend un système retardant au feu à base d'azote et de phosphore.

En d'autres termes, le système retardant au feu à base d'azote et de phosphore peut comprendre un ou plusieurs composés, chacun desdits composés comprenant de l'azote et/ou du phosphore. L'azote (respectivement le phosphore) peut être présent dans un ou plusieurs des composés du système retardant au feu à base d'azote et de phosphore.

Le système retardant au feu à base d'azote et de phosphore représente de préférence au plus 20% en poids environ, et de façon particulièrement préférée au plus 10% en poids environ, par rapport au poids total de la gaine polymère thermoplastique compacte.

Le système retardant au feu à base d'azote et de phosphore représente de préférence au moins 2% en poids environ, et de façon particulièrement préférée au moins 3% en poids environ, par rapport au poids total de la gaine polymère thermoplastique compacte.

Le système retardant au feu à base d'azote et de phosphore comprend de préférence au moins un composé comprenant du phosphore et de l'azote ; ou au moins un composé comprend du phosphore et au moins un composé comprenant de l'azote ; ou au moins un composé comprenant du phosphore et de l'azote en combinaison avec au moins un composé comprend du phosphore ou de l'azote.

Le composé comprenant du phosphore et de l'azote est avantageusement choisi parmi les phosphates (pyrophosphate, polyphosphate...) de pipérazine, le polyphosphate d'ammonium (APP), et les phosphates (Pyrophosphate, polyphosphates...) de mélamine.

Le composé comprenant du phosphore est de préférence choisi parmi le polyphosphate, le phosphinate d'aluminium, et leur mélanges ; et le phosphore rouge.

Le composé comprenant de l'azote est de préférence choisi parmi le cyanurate de mélamine, et les alcoxyamines,.

Selon une forme de réalisation particulièrement préférée de l'invention, le système retardant au feu à base d'azote et de phosphore comprend au moins un pyrophosphate de pipérazine (PAPP), et éventuellement au moins un sel de mélamine (e.g. les phosphates de mélamine, le cyanurate de mélamine).

Le pyrophosphate de pipérazine peut représenter de 40 à 75% en poids environ, et de préférence de 50 à 70% en poids environ, par rapport au poids total du système retardant au feu à base d'azote et de phosphore.

Le sel de mélamine peut représenter de 25 à 60% en poids environ, et de préférence de 30 à 50% en poids environ, par rapport au poids total du système retardant au feu à base d'azote et de phosphore.

Selon une forme de réalisation particulièrement préférée de l'invention, le rapport molaire phosphore/azote dans le système retardant au feu à base d'azote et de phosphore va de 0,5 à 1,5 environ. Cela permet ainsi d'améliorer les propriétés de retard à la flamme.

### Les autres composés de la gaine

La gaine peut comprendre en outre au moins une charge minérale.

L'utilisation d'une charge minérale en association avec le système retardateur de flamme permet notamment d'améliorer les performances d'ignifugation, d'induire des synergies avec le système à base Phosphore /Azote, et d'obtenir des propriétés mécaniques et thermiques améliorées.

La charge minérale peut être choisie parmi les oxydes et hydroxydes métalliques, les silicates, les carbonates métalliques, et un de leurs mélanges. L'oxyde de zinc est tout particulièrement adapté dans ce cadre.

Le carbonate de calcium, l'huntite, l'hydrotalcite, et l'hydromagnésite sont tout particulièrement préférés comme carbonates métalliques.

L'hydroxyde d'aluminium, et l'hydroxyde de magnésium sont tout particulièrement préférés comme hydroxydes métalliques.

Les aluminosilicates, et les silicates de magnésium sont tout particulièrement préférés comme silicates.

Selon une forme de réalisation préférée de l'invention, la charge minérale est choisie parmi le carbonate de calcium ; les mélanges de huntite et hydromagnésite ; et l'hydroxydes de magnésium.

La gaine polymère thermoplastique compacte peut comprendre au moins 0,1% environ en poids environ, et de préférence au moins 1,5% en poids environ de charge minérale, par rapport au poids total de la gaine polymère thermoplastique compacte.

La gaine polymère thermoplastique compacte peut comprendre au plus 50% en poids environ, et de préférence au plus 10% en poids environ de charge minérale, par rapport au poids total de la gaine polymère thermoplastique compacte.

La gaine polymère thermoplastique compacte peut comprendre en outre un ou plusieurs additifs.

Les additifs peuvent être choisis parmi des agents favorisant la mise en oeuvre tels que des lubrifiants, des agents compatibilisants, des antioxydants, des agents anti-UV, des agents anti-cuivre, des agents anti-arborescences d'eau, des pigments, et un de leurs mélanges.

La gaine polymère thermoplastique compacte peut typiquement comprendre de 0,01 à 5% en poids environ, et de préférence de 0,1 à 2% en poids environ d'additifs, par rapport au poids total de la gaine polymère thermoplastique compacte.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le 1,2-bis(3,5-di-tert-butyl-4-hydroxyhydrocinnamoyl) hydrazine (Irganox^{®} MD 1024), le pentaérythritol tétrakis(3-(3,5-di-*tert*-butyl-4-hydroxyphényl)propionate) (Irganox^{®} 1010), l'octadécyl 3-(3,5-di-*tert*-butyl-4-hydroxyphényl)propionate (Irganox^{®} 1076), le 1,3,5-triméthyl-2,4,6-tris(3,5-di-*tert*-butyl-4-hydroxybenzyl)benzène (Irganox^{®} 1330), le 4,6-bis (octylthiométhyl)-o-crésol (Irgastab^{®} KV10 ou Irganox^{®} 1520), le 2,2'-thiobis(6-*tert-*butyl-4-méthylphénol) (Irganox^{®} 1081), le 2,2'- thiodiéthylène bis[3-(3,5-di-*tert*-butyl-4-hydroxyphényl) propionate] (Irganox^{®} 1035), le tris (3,5-di-*tert*-butyl-4-hydroxybenzyl) isocyanurate (Irganox^{®} 3114), le 2,2'-oxamido-bis(éthyl-3(3,5-di-*tert*-butyl-4-hydroxyphényle)propionate) (Naugard XL-1), ou le 2,2'-méthylènebis(6-*tert*-butyl-4-méthylphénol).

À titre d'exemples d'antioxydants à base de soufre, on peut citer les thioéthers tels que le didodécyl-3,3'-thiodipropionate (Irganox^{®} PS800), le distéaryl thiodipropionate ou dioctadecyl-3,3'-thiodipropionate (lrganox^{®} PS802), le bis[2-méthyle-4-{3-n-alkyle (C₁₂ ou C₁₄) thiopropionyloxy}-5-*tert*-butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox^{®} 1520 ou Irgastab^{®} KV10).

À titre d'exemples d'antioxydants à base de phosphore, on peut citer le tris(2,4-di-*tert-*butyl-phényle)phosphite (Irgafos^{®} 168) ou le bis(2,4-di-*tert*-butylphényl)pentaérythritol diphosphite (Ultranox^{®} 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl)-N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

### La couche électriquement isolante

La couche électrique isolante est de préférence une couche polymère.

Elle peut par exemple comprendre au moins un polymère ou copolymère d'éthylène.

Typiquement, la couche électriquement isolante est une couche qui ne contient pas d'agent ignifugeant. En particulier, le plus souvent, la couche isolante ne contient pas de système retardant au feu, et selon un mode usuel, la couche isolante ne contient pas le système retardant au feu à base d'azote et de phosphore tel que présent dans la gaine polymère thermoplastique compacte qui l'entoure.

### Le câble

Selon une forme de réalisation préférée, l'élément électriquement conducteur allongé est en aluminium, en cuivre, en alliage de cuivre, ou en alliage d'aluminium.

Le câble conforme à la présente invention peut comprendre une pluralité d'éléments électriquement conducteurs allongés. Dans ce cas, la pluralité d'éléments électriquement conducteurs allongés peut être entourée par la couche électriquement isolante.

### Design basse tension

La présence de la couche électriquement isolante et de la gaine polymère thermoplastique compacte permet d'obtenir un câble basse tension (dénommée ci-après première variante).

Selon une forme de réalisation préférée de cette première variante, la gaine polymère thermoplastique compacte est en contact physique direct avec la couche électriquement isolante.

Dans la présente invention, l'expression « en contact physique direct » signifie qu'aucune couche, de quelque nature que ce soit, ne vient s'intercaler entre ladite couche électriquement isolante et ladite gaine polymère thermoplastique compacte. En d'autres termes, le câble ne comprend pas de couche(s) intermédiaire(s), notamment de couche(s) comprenant au moins un polymère, positionnée(s) entre ladite couche électriquement isolante et ladite gaine polymère thermoplastique compacte.

La couche électriquement isolante est également de préférence en contact physique direct avec l'élément électriquement conducteur allongé.

Selon une forme alternative de cette première variante, le câble peut comprendre en outre un écran métallique. De préférence, la gaine polymère thermoplastique compacte entoure l'écran métallique, et de façon particulièrement préférée, la gaine polymère thermoplastique compacte est en contact physique direct avec l'écran métallique.

Selon cette alternative de la première variante, l'écran métallique peut entourer la couche électriquement isolante, et de préférence être en contact physique direct avec celle-ci.

De manière avantageuse, le câble de l'invention est un câble basse tension. En d'autres termes, il ne comprend pas de couche(s) semi-conductrice(s).

### Design moyenne tension

Selon une autre forme de réalisation préférée (dénommée ci-après deuxième variante), le câble comprend en outre au moins une couche semi-conductrice entourant l'élément électriquement conducteur allongé, ladite couche semi-conductrice étant typiquement elle-même entourée par la gaine polymère thermoplastique compacte. La présence de la couche électriquement isolante, d'au moins une couche semi-conductrice, et de la gaine polymère thermoplastique compacte permet d'obtenir un câble moyenne tension.

Typiquement, une couche semi-conductrice telle qu'employée dans cette deuxième variante est une couche qui ne contient pas d'agent ignifugeant. En particulier, le plus souvent, cette couche semi-conductrice ne contient pas de système retardant au feu, et selon un mode usuel, elle ne contient pas le système retardant au feu à base d'azote et de phosphore présent dans la gaine polymère thermoplastique compacte qui l'entoure.

Selon cette deuxième variante, le câble peut comprendre en outre un écran métallique. De préférence, la gaine polymère thermoplastique compacte entoure l'écran métallique, et de façon particulièrement préférée, la gaine polymère thermoplastique compacte est en contact physique direct avec l'écran métallique.

Selon la deuxième variante, la couche semi-conductrice est de préférence une couche semi-conductrice interne.La couche électriquement isolante peut alors entourer la couche semi-conductrice interne, et être de préférence en contact physique direct avec celle-ci.

La couche semi-conductrice interne est de préférence en contact physique direct avec l'élément électriquement conducteur allongé.

Le câble peut comprendre en outre une couche semi-conductrice externe.

La couche semi-conductrice externe peut alors entourer la couche électriquement isolante, et être de préférence en contact physique direct avec celle-ci.

La gaine polymère thermoplastique compacte (et de préférence l'écran métallique s'il existe) entoure de préférence la couche semi-conductrice externe, et est de façon particulièrement préférée en contact physique direct avec celle-ci.

Selon une forme de réalisation particulièrement préférée, le câble de l'invention comprend au moins un élément électriquement conducteur allongé, notamment positionné au centre du câble :
- une couche semi-conductrice interne entourant ledit un élément électriquement conducteur allongé,
- une couche électriquement isolante entourant ladite couche semi-conductrice interne,
- une couche semi-conductrice externe entourant ladite couche électriquement isolante,
- un écran métallique entourant ladite couche semi-conductrice externe, et
- une gaine polymère thermoplastique compacte telle que définie dans l'invention entourant ledit écran métallique.

Ainsi, la couche semi-conductrice interne, la couche électriquement isolante et la couche semi-conductrice externe constituent une isolation tricouche. Plus particulièrement, la couche semi-conductrice interne est directement en contact physique avec la couche électriquement isolante, et la couche semi-conductrice externe est directement en contact physique avec la couche électriquement isolante.

### Mélange maître

Un deuxième objet de la présente invention est un mélange maître (dit « *Masterbatch* » en anglais) pour fabriquer un câble tel que défini dans le premier objet de l'invention, ledit mélange maitre étant caractérisé en ce qu'il comprend :
- au moins 40% , par exemple au moins 50%, en poids d'un système retardant au feu à base d'azote et de phosphore tel que défini dans le premier objet par rapport au poids total du mélange maître, et
- au moins 50% en poids d'une polyoléfine telle que définie dans le premier objet de l'invention par rapport au poids total de polymère(s) dans le mélange maître, ladite polyoléfine étant une polyoléfine non polaire.

Le mélange maître est notamment destinée à être utilisé pour fabriquer la gaine polymère thermoplastique compacte telle que définie dans le premier objet de l'invention.

Ledit mélange maitre comprend de préférence de 55 à 75% en poids environ du système retardant au feu à base d'azote et de phosphore, et de façon particulièrement préférée de 60 à 70% en poids environ du système retardant au feu à base d'azote et de phosphore, par rapport au poids total du mélange maître.

Ladite polyoléfine non polaire représente de préférence au moins 60% en poids environ, et de façon particulièrement préférée au moins 70% en poids environ, par rapport au poids total de polymère(s) dans le mélange maître.

Le mélange maitre peut comprendre en outre une charge minérale telle que défini dans l'invention.

Le mélange maitre comprend de préférence de 10 à 40% en poids environ charge minérale, par rapport au poids total du mélange maître.

### Procédé de fabrication du câble

L'invention a pour troisième objet un procédé de fabrication d'un câble conforme au premier objet de l'invention, caractérisé en ce qu'il comprend au moins les étapes suivantes :
i) préparer un mélange maitre tel que défini dans le deuxième objet de l'invention,
ii) mélanger le mélange maitre avec au moins une polyoléfine pour former une composition polymère, et
iii) appliquer la composition polymère autour de l'élément électriquement conducteur allongé, pour former la gaine polymère thermoplastique compacte.

L'application des étapes ii) et iii) est de préférence effectuée par extrusion, notamment par des techniques bien connues de l'homme du métier.

Préalablement à l'extrusion, l'ensemble des constituants nécessaires à la formation du mélange maitre, peuvent être dosés et mélangés lors de l'étape i) dans un mélangeur en continu de type co-malaxeur BUSS, extrudeuse bi-vis ou un autre type de mélangeur approprié pour des mélanges polymères (mélangeur discontinu tel qu'un mélangeur interne ou bi-cylindre, notamment), notamment chargés.

Le mélange du mélange maitre avec au moins une polyoléfine pour former une composition polymère ainsi que les additifs sont typiquement ajoutés par mélange physique en tête de vis dans les trémies doseuses lors de l'extrusion et sont ainsi dispersés par voie fondue lors de l'extrusion.

### Exemple

Trois gaines compactes ont été testées, dont les compositions sont reportées dans le Tableau 1 ci-dessous.

La gaine A, décrite ici à des fins de comparaison, est une gaine compacte sans système retardateur de flamme.

La gaine B, également présentée à titre comparatif, est un gaine compacte avec un système retardateur de flamme halogénés ;

La gaine C est une gaine aine compacte selon l'invention comprenant un système retardant au feu contenant de l'azote et du phosphore.

**Tableau 1**

| | A | B | C |
|---|---|---|---|
| HDPE | 96% | 94% | 88% |
| Masterbatch couleur | 4% | 4% | 4% |
| Masterbatch halogéné | | 2% | |
| Masterbatch P/N | | | 8% |

Le HDPE utilisé dans les trois gaines est un HDPE grade extrusion pour application câble. Il présente une densité de 0,95 g/cm3, une dureté de 61 shore D, un MFI @190°C sous 5kg de 1,1 g/10minutes et une température de fusion de 130°C.

Le « Masterbatch couleur » est un mélange maître colorant et stabilisant pour application câble (gainage). Il contient entre autres du noir de carbone, du carbonate de calcium et un antioxydant de type phénol encombré (pentaérythritol tétrakis(3-(3,5-di-*tert*-butyl-4-hydroxyphényl)propionate).

Le « Masterbatch halogéné » est un mélange maître ignifugeant contenant 40 % de LDPE et 60 % d'un système retardant au feu à base de trioxyde d'antimoine et d'un composé organobromé. La température de fusion du masterbatch halogéné est de 130 °C.

Le « Masterbatch P/N » est un mélange maître ignifugeant contenant 65 % d'un système retardant au feu à base de pyrophosphate de pipérazine (50-60 %) et d'un sel mélamine-phosphate (40-50 %). Le Masterbatch P/N contient également 35 % de HDPE pour application câble, tel que décrit ci-dessus.

Trois modèles de câbles similaires de type 'moyenne tension' ont été produit en utilisant respectivement une des compositions A, B et C du tableau 1 à titre de gaine compacte, selon l'assemblage décrit ci-après. Les trois modèles de câble ne diffèrent que par la composition de la gaine compacte.

Un système d'isolation tricouche comprenant un semiconducteur interne, un isolant et un semiconducteur externe pour une épaisseur totale d'environ 30 mm a été déposé sur une corde assemblée en aluminium.

Un ruban gonflant superposé d'un ruban aluminium longitudinal a ensuite été déposé sur l'ensemble.

Enfin, une gaine compacte d'une épaisseur d'environ 2,5 mm, à base d'une des compositions décrite dans le tableau 1, a été déposée sur l'ensemble.. L'application de la gaine compacte a été réalisée par extrusion, le HDPE sous forme de granulé et le « Masterbatch » considéré étant mélangés dans les trémies doseuses en amont de l'extrudeuse et la dispersion en fondu se faisant lors de l'étape d'extrusion de la gaine, ce qui permet l'obtention du câble final.

Les Tableaux 2 et 3 ci-dessous récapitulent les résultats obtenus pour chacune des compositions A, B et C testées.

**Tableau 2**

| **Composition testée** | | **A** | **B** | **C** |
|---|---|---|---|---|
| **Propriétés mécaniques de la gaine compacte** | | | | |
| Dureté | > 50 | 98 | 95 | 95 |
| TSP (MPa) | > 12.5 | 25.2 +/- 0.3 | 26.7 +/- 6 | 24.8 +/- 0.3 |
| EB (%) | > 300 | > 719 | > 736 | 1202 +/- 70 |
| Indice limite d'oxygène de la gaine | | | | |
| ILO (%) | / | 18 | Non mesuré | 20 |
| Cône calorimètre (50 kW/m²) - moyenne sur 3 échantillons de gaine | | | | |
| THR (kW/m²) | / | 121 | 123 | 113 |
| PHRR (kW/m²) | / | 1233 | 1244 | 714 |
| SEA (m²/kg) | / | 491 | 532 | 695 |

**Tableau 3**

| **Composition testée** | | **A** | | **B** | | **C** | |
|---|---|---|---|---|---|---|---|
| Essai vertical de propagation de la flamme (selon na lormer NF EN 60332-1-2 (2005) + A11(2017)) sur câble complet | | | | | | | |
| N° essai | | 1 | 2 | 3 | 4 | 5 | 6 |
| Temps d'extinction de la flamme (s) | | 349 | 360 | 7 | 5 | 413 | 378 |
| H1 (mm) | Spécification : > 50.5 | 380 | 380 | **380** | **395** | 365 | 390 |
| H2 (mm) | Spécification < 539.5 | 542 | 545 | **510** | **510** | 500 | 520 |
| H=H2-H1 | | 162 | 165 | 130 | 115 | 135 | 130 |
| Gouttes | | OUI | OUI | OUI | OUI | **NON** | **NON** |
| Conformité | | **NON** | **NON** | OUI | OUI | OUI | OUI |

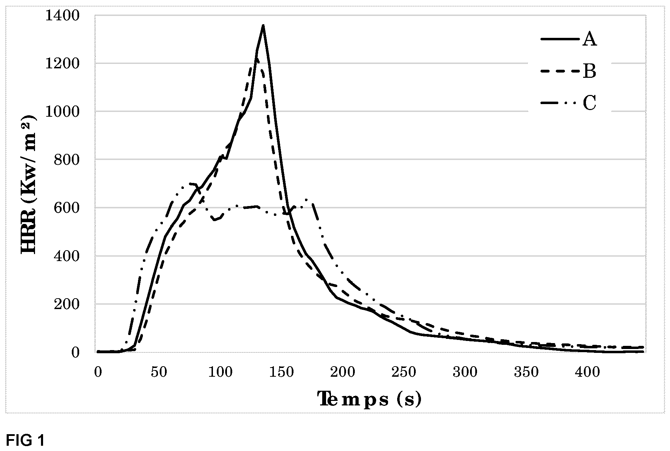

La **Figure 1** ci annexée est une superposition des courbes d'évolution du dégagement de chaleur des trois gaines au cours du temps, lorsqu'elles sont soumises à un test au cône calorimètre à 50 kW/m².

***En comparaison avec la gaine A :***
la gaine C présente des propriétés au feu améliorées tout en maintenant des propriétés mécaniques similaires : l'indice limite d'oxygène (ILO) est plus élevé, le taux de dégagement de chaleur maximal (PHRR) est plus faible. De plus, la gaine C permet au câble complet de passer avec succès l'essai vertical de propagation de la flame et présente l'avantage d'empêcher la formation de gouttes lors de la combustion.

***En comparaison avec la gaine B :***
la gaine C permet de limiter le taux de dégagement de chaleur maximal et d'éviter la formation de gouttes lors de la combustion. De plus, et contrairement à la gaine B, la gaine C ne contient ni composé halogéné ni trioxyde d'antimoine, substances vouées à être supprimées pour des raisons réglementaires.

## Revendications

1. Câble comprenant au moins un élément électriquement conducteur allongé, et au moins une couche électriquement isolante entourant ledit élément électriquement conducteur allongé, **caractérisé en ce qu'**il comprend en outre au moins une gaine polymère thermoplastique compacte entourant ladite couche électriquement isolante, ladite gaine polymère thermoplastique compacte comprenant au moins une polyoléfine et au moins un système retardant au feu à base d'azote et de phosphore.

2. Câble selon la revendication 1, **caractérisé en ce que** la gaine polymère thermoplastique compacte est une gaine externe.

3. Câble selon la revendication 1 ou 2, **caractérisé en ce que** la polyoléfine est choisie parmi les polymères d'éthylène et les polymères de propylène.

4. Câble selon l'une quelconque des revendications précédentes, **caractérisé en ce que** la polyoléfine est une polyoléfine non polaire.

5. Câble selon l'une quelconque des revendications précédentes, **caractérisé en ce que** la polyoléfine représente au moins 50% en poids par rapport au poids total de la gaine polymère thermoplastique compacte.

6. Câble selon l'une quelconque des revendications précédentes, **caractérisé en ce que** le système retardant au feu à base d'azote et de phosphore représente au plus 20% en poids par rapport au poids total de la gaine polymère thermoplastique compacte.

7. Câble selon l'une quelconque des revendications précédentes, **caractérisé en ce que** le système retardant au feu à base d'azote et de phosphore comprend au moins un pyrophosphate de pipérazine, et éventuellement au moins un sel de mélamine.

8. Câble selon la revendication 7, **caractérisé en ce que** le pyrophosphate de pipérazine représente de 40 à 75% en poids par rapport au poids total du système retardant au feu à base d'azote et de phosphore.

9. Câble selon la revendication 7 ou 8, **caractérisé en ce que** le sel de mélamine peut représenter de 25 à 60% en poids par rapport au poids total du système retardant au feu à base d'azote et de phosphore.

10. Câble selon l'une quelconque des revendications précédentes, **caractérisé en ce que** la gaine polymère thermoplastique compacte comprend en outre au moins une charge minérale.

11. Câble selon la revendication 10, **caractérisé en ce que** la charge minérale est choisie parmi les oxydes et hydroxydes métalliques, les silicates, les carbonates métalliques, et un de leurs mélanges.

12. Câble selon l'une quelconque des revendications précédentes, **caractérisé en ce qu'**il comprend en outre une couche semi-conductrice entourant l'élément électriquement conducteur allongé.

13. Câble selon l'une quelconque des revendications précédentes, **caractérisé en ce qu'**il comprend en outre un écran métallique.

14. Mélange maître pour former une gaine polymère thermoplastique compacte dans un câble tel que défini à l'une quelconque des revendications précédentes, ledit mélange maitre étant **caractérisé en ce qu'**il comprend :
- au moins 40% en poids d'un système retardant au feu à base d'azote et de phosphore par rapport au poids total du mélange maître, et
- au moins 50% en poids d'une polyoléfine telle que définie dans le premier objet de l'invention par rapport au poids total de polymère(s) dans le mélange maître, ladite polyoléfine étant une polyoléfine non polaire.

15. Procédé de fabrication d'un câble tel que défini à l'une quelconque des revendications précédentes, **caractérisé en ce qu'**il comprend au moins les étapes suivantes :
i) préparer un mélange maitre tel que défini à la revendication 14,
ii) mélanger le mélange maitre avec au moins une polyoléfine pour former une composition polymère, et
iii) appliquer la composition polymère autour de l'élément électriquement conducteur allongé, pour former la gaine polymère thermoplastique compacte.
